# EUROPEAN PATENT SPECIFICATION

(11) **EP 0 818 396 B1**
(45) Date of publication and mention of the grant of the patent: **25.04.2007**
(21) Application number: 97110657.0
(22) Date of filing: 27.09.1994
(51) Int. Cl.: B65D 41/48, B65D 23/06

(54) **Preform with closure**
Vorform mit Verschluss
Préforme comprenant une fermeture

(30) Priority: 27.09.1993 BE 9301010
(43) Date of publication of application: 14.01.1998
(62) Divisional of application: 94926732.2
(73) Proprietor: RESILUX, B-9230 Wetteren (BE)
(72) Inventor: De Cuyper, Dirk, 9070 Destelbergen (BE)
(74) Representative: Petsis, Christos

(56) References cited:
- EP-A- 0 160 309
- WO-A-84/01541
- FR-A- 2 203 747

## Description

### Background of the invention

This invention relates to a preform with closure as an intermediate product for a container, in particular for viscous liquids such as oils and the like.

### Prior art

When such liquids are being poured out of a container, such as a bottle, a droplet always remains suspended when the container is straightened up again. In order to prevent said droplet from trickling down along the outside wall of the container, it is already known to use a pouring spout consisting of two pieces which are permanently fixed against each other. In this case one pouring piece is formed by the neck of the container, and the other, the pouring piece proper, is permanently fixed in it. The abovementioned pouring piece proper is provided with an encircling external well, which acts as a droplet collector and ensures that the droplets do not run down along the external surface of the container, but flow back into the container by way of said well. This means that the container can retain a neat appearance.

However, this is an expensive process, due to the fact that two pouring pieces are required for each container. Moreover, due to the fact that the two pouring pieces are generally made of a different material, additional operations are necessary if the containers are to be recycled after use. This immediately makes the refuse processing more time-consuming.

Document FR-A-2 203 747 relates to a container having a fixed pouring spout which is integral with the tubular sidewall of the container, wherein said spout has a pair of outerly extending protrusions, which is yet adapted to engage with an inwardly extending engagement means of a closure cap thereby cooperating with a sleeve. However, said document neither discloses a preform as such nor in combination with a closure cap. Besides, said document discloses sealing caps to be adapted on a container including a sleeve extending the neck of the container to receive the cap thereon. Said sleeve thereby constitutes an additional item in the overall closing device, thereby forming an additional intermediate piece therein.

Neither does document WO-A-84/01541 relate to a preform but instead discloses a no-drip pouring lip used in connection with containers for liquids and a process for manufacturing same. A known solution to the problem of e.g. oil dripping with such containers is to form the container by e.g. injection blow moulding. However, the latter process is readily set aside in said document and the skilled man is directed to an extrusion process to form a parison, which must be subsequently positioned between a blow pin and an anvil. Cutting and forming tools are then brought into contact with the parison in opposition to the anvil, thereby forming a no-drip lip. The no-drip pouring lip is thus formed integrally on an extension blow moulded container during the finishing step of cutting the top of the container. Additionally, the no-drip pouring rib is carried out with an additional step. The required tools for making said rib are rather expensive and the needed perfect overall alignment to obtain a satisfactory no-drip rib forms a substantial drawback.

### Summary of the invention

The object of the invention is to eliminate the abovementioned drawbacks including an additional closing commodity. This object is attained according to the invention by a preform as defined in the Claims. Due to the fact that the number of pouring pieces is reduced to one, less material is required, resulting in a first cost saving. The finishing costs of the usable container ready for pouring are also lower, since the step of providing a further intermediate piece is no longer needed. Besides, the preform with closure obtained is more environmentally friendly, because recycling no longer requires prior sorting of the different pouring pieces. Moreover, the additional feature of a closing cap allows having a set ready to be transformed straightforwardly to a bottle provided with a closure.

Besides, thanks to the above-mentioned measures according to the invention, there is provided a preform with a non-drip pouring spout obtained readily even before blow moulding thereof to a final container. This simplifies considerably the production, thus providing an intermediate product in one sole process step which can readily be used for blowing to a container without any additional working step needed.

A further advantage of this one-step method is a high degree of precision of the required shape of the no-drip rib which can thus be obtained without any subsequent deformation of the spout and risk of even slightly damaging or affecting the perfect working thereof.

Further details of the preform according to the invention are defined in the sub-claims.

Other advantages will emerge from the description which follows of an embodiment of a closable preform according to the invention with reference to the appended drawings.

### Brief description of the drawings

Figure 1 shows a sectional view along the longitudinal axis of a known preform.
Figure 2 shows a partial view similar to that of Figure 1 of a preform according to the invention without closure cap.
Figure 3 shows a view similar to that of Figure 2 with closure cap.
Figure 4 is a view similar to that of Figure 1.
Figure 5 tot 12 show further variants in a partial view similar to those of Figures 2 and 3 respectively.

### Description

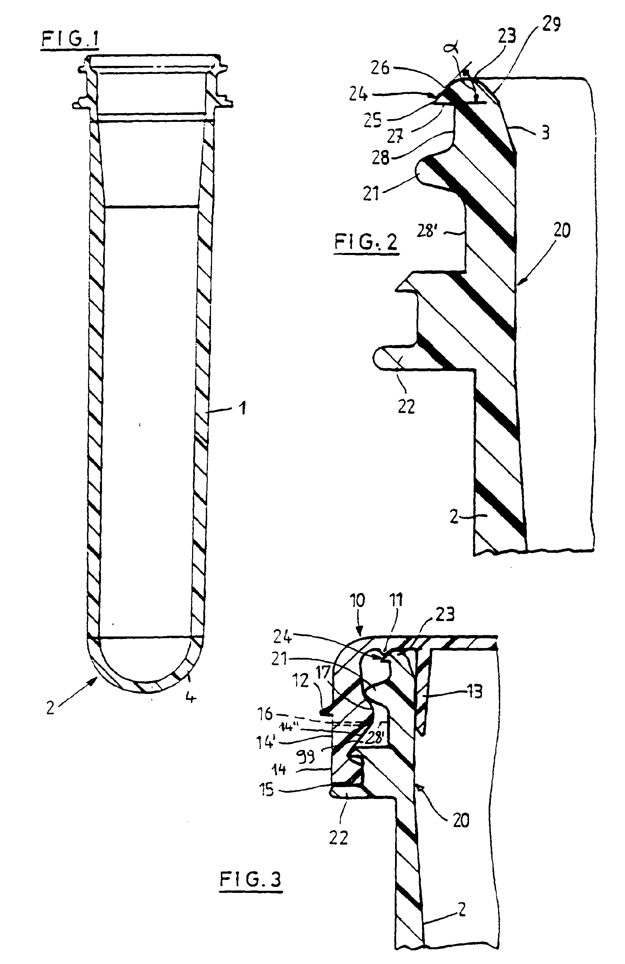

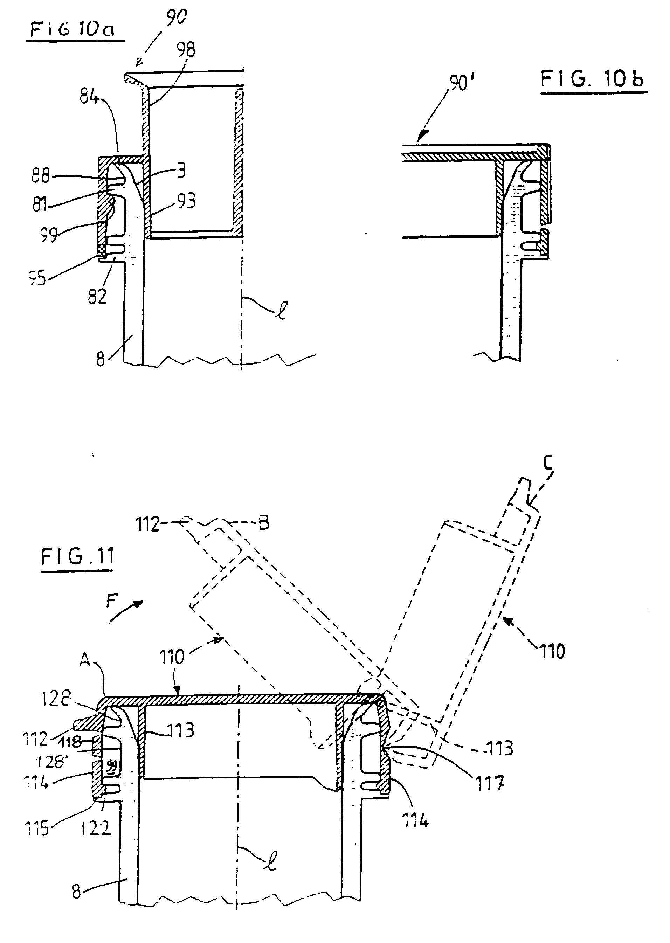

In general, this invention relates to a closable preform intended for containing a liquid. The preform comprises a pouring spout 20 and is closable by means of a closure cap 10 as shown in Figures 3 and 11. The closure cap 10 is in the form of, for example, a flap cover and in this case can be flapped onto the pouring spout 20, which acts as a counter-closure for the closure cap 10.

This concerns in particular oil performs which are obtained by means of a known production process from pre-dried PET granules and which are processed by means of an injection moulding process to give semi-finished products, the so-called oil preforms. In this case the preforms are blown further to the form of, e.g., bottles. The pouring spout 20 is made integral with the preform 2. This has the essential advantage that the production process of closable bottles or containers is considerably speeded up, and the production process is also simpler. Moreover, due to the fact that the container is in one piece and there is no longer an intermediate piece which was required in the known embodiment, an appreciable saving in weight is obtained.

The abovementioned preforms are provided with a cap 10 which serves as the closure for the liquid to be contained and as a security ring. A third function is also fulfilled, namely that thanks to the pouring spout, during the pouring of a viscous liquid such as oil out of the container or bottle, the last droplet is conveyed back into the container or bottle. This prevents soiling of the oil bottle.

As can be seen from Fig. 3,9,11 both pouring spout and closure cap are guaranteed by a security ring 14. Ultimately, the cap 10 consists of a single piece which serves as both closure and security strip 78, 118. Figure 3 also shows a pull tab 12 which is disposed on the side of the closure cap 10, for opening the guaranteed container or bottle by tearing said strip off the ring 14 along, e.g., a perforation 16.

It can also be seen from Fig. 2 that the pouring spout 20 has a profiled neck 3, a pouring edge 23 of which forms the division between an inner surface 29 and an external profile. An encircling projection 24, which is, e.g., pointed 25, is provided on the external profile of the neck 3. The projection 24 extends preferably substantially radially relative to the longitudinal axis of the container. This promotes an efficient droplet discharge. The cross-section of the pointed projection is, e.g., bounded by two substantially straight legs 26, 27, one leg 27 of which extends, e.g., substantially radially relative to the abovementioned longitudinal axis 1. More generally speaking, the abovementioned projection is bounded by two boundary faces 26, 27 which form an angle α ranging, e.g., between 30 and 80°, preferably between 45° and 65°. A guided and thus more regular trickling of the droplets can thus be obtained. This effect is particularly pronounced if the boundary surface 27 facing the bottom ot the container is rounded off with the curvature in the material of the neck.

The inner surface of the neck 3 is advantageously convex, in particular with a stepwise increase of its gradient from the pouring edge 23 towards the bottom of the container. This enhances a regular outflow of the liquid when it is being poured out.

The abovementioned projection 24 in this case preferably forms a continuation of the curve of the abovementioned inner surface profile.

The closure cap 10 also has on its bottom an encircling rib 11 which interacts with the abovementioned spout edge 23, as can be seen from Fig.3. A good seal is obtained on the container as a result of this. In order to ensure that the closure cap is not screwed or pushed in too far on the pouring spout, thereby possibly also causing damage to the pouring spout through, e.g., lateral buckling, a seat 22 is provided opposite the free edge 15 of the closure cap 10, which seat acts a stop for the closure cap and is integral with the pouring spout.

In the preferred embodiment, the preform is adapted for being subjected to blow moulding a container, said preform having a bottom 4, a tubular wall 1 extending upwardly from said bottom 4 in an elongated manner. The part of the wall 1 opposite said bottom 4 forms a pouring spout 20 with a profiled neck 3 encompassing a pouring opening 5 wherein said pouring spout 20 is integral with said tubular wall 1, said spout 20 having a symmetrically rotational configuration. The neck 3 is provided with an externally extending annular projection 24; 34; 44; 64; 84 forming a first pouring no-drip rib at said opening, said rib including a downwardly extending pouring surface which extends outwardly from said wall 1. The external profile of the neck 3 is provided with at least one further annular projection 21, 22; 31, 31', 32; 41 forming at least one second no-drip rib, wherein said first pouring no-drip rib and said second no-drip rib 21, 22; 31, 31', 32; 41 delimitate an annular recess 28; 38, 38', 38"; ... therebetween.

Further, said top rib 24; 34; ... and each second rib extend convexly with respect to said wall. Still further, said top rib 24 is bounded by two substantially straight surfaces 26, 27 forming an angle α in between, the bottom one 27 of which forms a boundary surfaces 27 for said recess 28 extending substantially perpendicularly to the longitudinal axis 1 of the preform.

Alternatively, said top rib 34; 54; 64; 84 is bounded by at least one curved surface 36; 46; 56;.... Further said top rib 44, 54 has a truncated edge 45; 55.

In addition, the invention also relates to a method for subjecting an injection moulded preform to a blow moulding process to form a container and to a further blow moulding process maintaining the spout configuration of the preform, thereby to achieve a container with a closure cap whereby said container is processed from a preform including, yet before processing to the container, a closure cap on the spout configuration which remains unchanged after said manufacturing process.

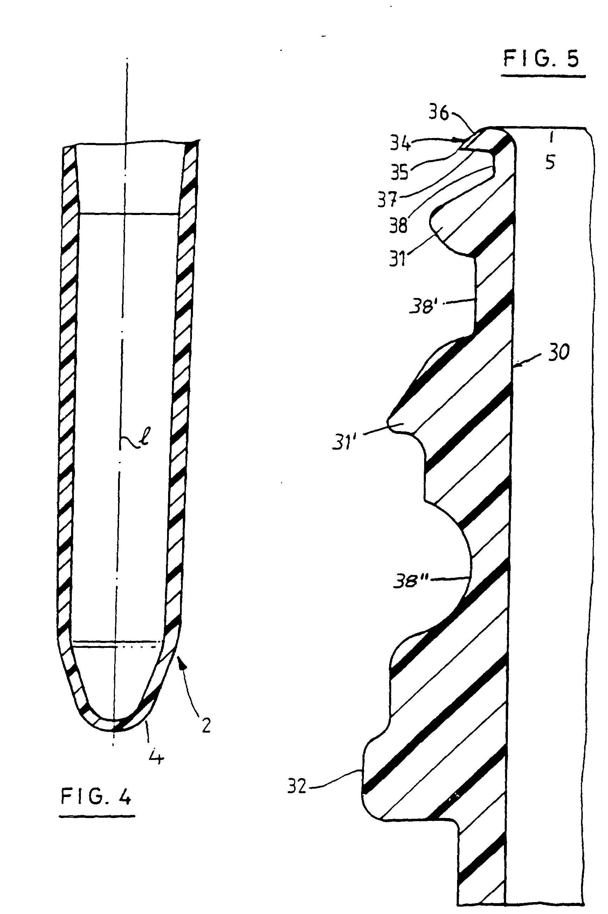

Figure 4 shows a variant of a preform 2, in which the bottom zone 4 has a conical profile. This embodiment is suitable in particular for forming into bottles of square section and permits a better material distribution over the bottle. In any case, excess material on the bottom of the finished bottle can be prevented by it. What this means is that, with the same wall thickness after blowing of the bottle, an appreciable weight saving can be obtained. The bottom profile and the apex angle are such that nesting of preforms when they are stacked is avoided.

Figure 5 is a partial view of a preform in which the external profile of the pouring spout 30 has various encircling wells 38, 38', 38", which are separated from each other by adjacent ribs 31, 31', 32. This ensures that liquid droplets which have escaped from the abovementioned projection 34 are retained through being collected in the respective wells, and soiling of the walls of the container is rendered virtually impossible.

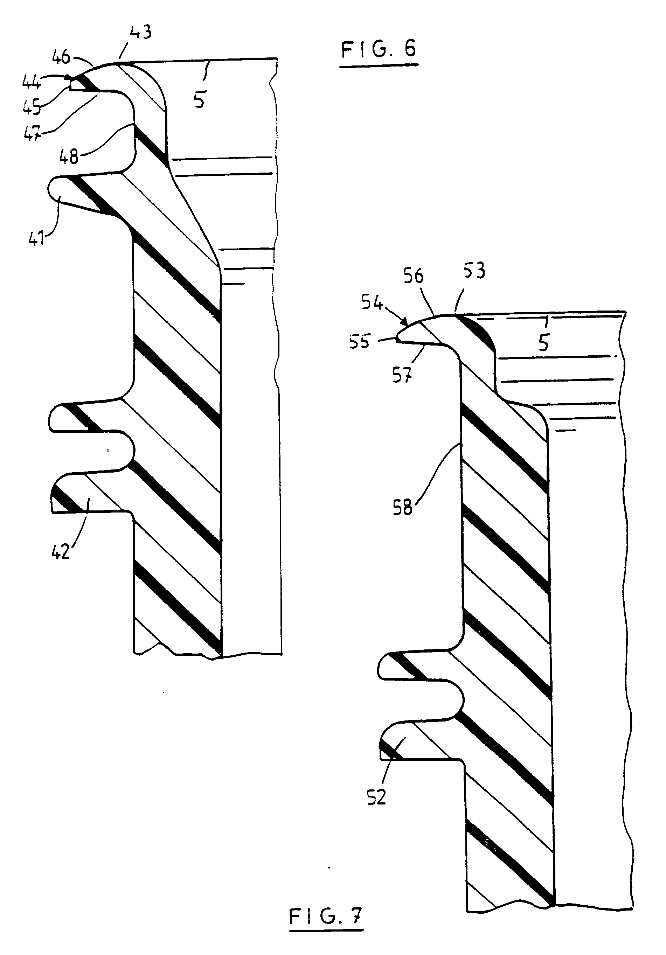

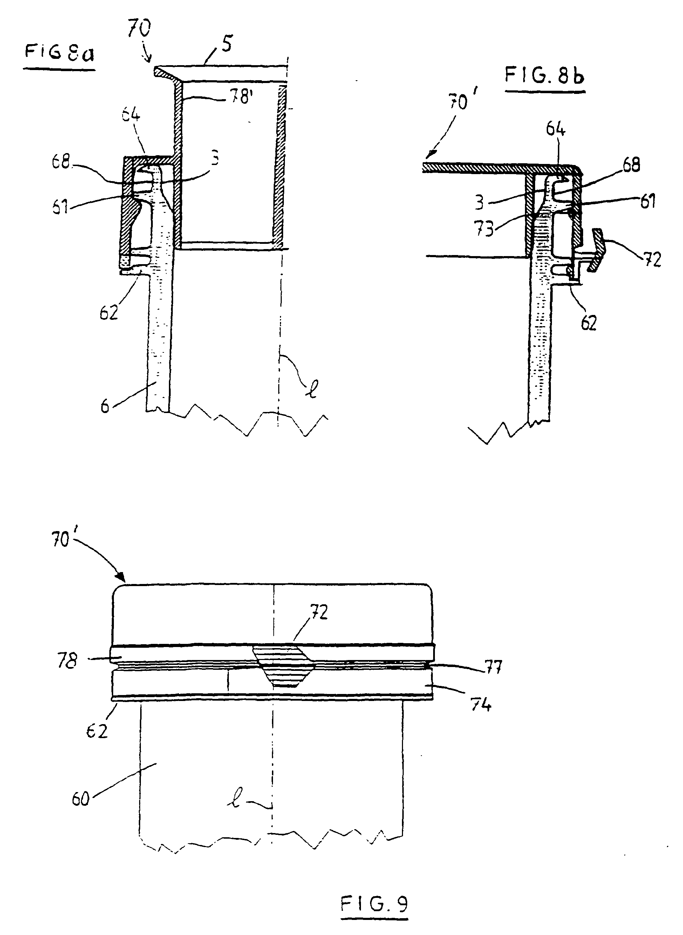

In Figures 6 and 7 the abovementioned projections 44, 54 are in each case truncated at their respective edges 45, 55. This embodiment is particularly advantageous for viscous liquids such as oils. This means that a droplet running down from the pouring edge 43, 53 is interrupted in its movement and, through the viscosity characteristic of the liquid, will have the tendency not to pass the break point of the rounded leg 46, 56. This further avoids liquid running down and soiling the walls 1.

Through the presence of the break point, the mass of inflowing liquid increases there, due to the suddenly accumulating liquid, in such a way that the cohesion increases and the viscous liquid flows back to the pouring edge 45, 55. In order to obtain a good flowback effect, each curved leg 46, 56 has a radius of curvature of, e.g., approximately 1,5 to 2,5 cm, preferably about 2 cm. Each further leg 47, 57 is advantageously slanted slightly towards the adjacent well 48, 58. The gradient is, e.g., approximately 2,5° to 8°, preferably about 5° relative to the transverse direction of the preform. Each well 48, 58 is bounded by fillets with a radius ranging between 0,2 and 0,6 cm, for example approximately 0,4. The height h of the well is, e.g., of the order of magnitude of a droplet size as additional security against droplet running. A double ring 42, 52 is also provided, for the fitting thereon of the security ring of the closure cap.

In Figures 8a and 8b the preform shown in Figure 6 is shown with a closure cap 70, 70' fitted thereon. Cap 70 is a so-called two-component cap, and cap 70' is a monocap. These figures illustrate clearly that the same preform 6 can be used for different types of caps. This is illustrated further in a similar way by Figures 10a, 10b and 11, in which the same preform 8 can be used for various types of caps, in the last case in Figure 11 a so-called hinged cap or flap cap 110. This produces a standard preform with universal neck which can be used for various types of caps, including the traditional two-component cap.

The hinged cap 110 is shown in various positions A, B, C in Figure 11. Position A represents the closed poisition, in which the free edge lies against the seat 122.

The pouring opening can be opened by moving the hinged cap 110, by means of pull tab 112, into a deflected position B in the direction of arrow F until it is in a working position C, in which the preform or container can be emptied or its contents poured out. An advantage in this case is that the container can be opened and reclosed in a fairly rapid and handy operation. For all that is necessary is to exert slight pressure on the pull tab in order to overcome the snap connection between closure cap 110 and pouring spout 8. Moreover, during use of the container, i.e. during, e.g., the pouring of liquid present in the container, the closure cap 110 always remains fixed to the container, in hinge connection 117 between the actual closure cap 110 itself and the security strip 114, which is fixed around the neck and serves as a support for the closure cap 110. This means that the closure cap is always to hand and consequently cannot be lost. It can advantageously be made from the same material as the preform itself.
A tear strip running substantially all the way round is indicated by 118. A preform closed by a closure cap 70' is shown in full in Figure 9. The tear strip 78 to be removed for breaking the seal of the container is separated from the security strip 74 by a thinned section 77.

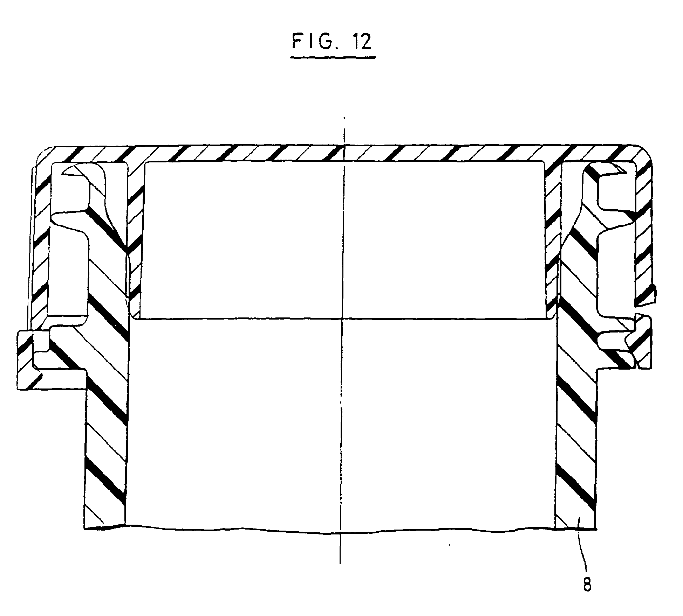

Another variant of the assembly of pouring spout 8 with adapted closure cap is shown further in Figure 12 on a large scale.

The security ring 114 in Figure 11 advantageously extends to a certain height of the further collection well 128', in such a way that in the vertical position of the container a cup is formed by the well at one side and the projecting part of the security ring 114 opposite it, in which cup any running droplets of the liquid in the container can be collected, thus preventing soiling of the walls of the container.

The projecting part indicated by 21, 31, 41 also serves as a counter-closure against forceful closing of the closure cap on the pouring spout. It also serves to clamp thereon the closure cap which has, for example, a bulge 17 which produces a snap connection with the abovementioned projecting part 21, 31, 41. A suitable rounded profile means that good guidance of the closure cap thereon is obtained.

## Claims

1. Preform adapted for being subjected to blow moulding a container, said preform having a bottom (4), a tubular wall (1) extending upwardly from said bottom (4) in an elongated manner, wherein the part of the wall (1) opposite said bottom (4) forms a pouring spout (20) with a profiled neck (3) encompassing a pouring opening, wherein said pouring spout (20) is integral with said tubular wall (1), said spout (20) having a symmetrically rotational configuration, wherein the neck (3) is provided with an externally extending annular projection (24; 44; 64; 84) forming a first pouring no-drip rib at said opening, said rib including a downwardly extending pouring surface which extends outwardly from said wall (1), the external profile of the neck (3) being provided with at least two further annular projections (21, 22; 41) forming at least one second no-drip rib, wherein said first pouring no-drip rib and one of the further annular projections (21, 22; 41) delimitate an annular recess (28; 128...) therebetween, and wherein at least one further annular recess (28'; 128'...) is delimitated between said further annular projections (21, 22; 41).

2. Preform according to claim 1, wherein said top rib (24; ...) and each second no-drip rib extend convexly with respect to said wall.

3. Preform according to one of the claims 1 or 2, wherein said top rib (24) is bounded by two substantially straight surfaces (26, 27) forming an angle (α) in between, the bottom one (27) of which forms a boundary surface (27) for said recess (28) extending substantially perpendicularly to the longitudinal axis (ℓ) of the preform.

4. Preform according to the preceding claim, wherein said angle (α) ranges between 30° and 80°, preferably between 45° and 65°.

5. Preform according to one of the claims 1 or 2, wherein said top no-drip rib (54; 64; 84) is bounded by at least one curved surface (46; 56; ...).

6. Preform according to one of the preceding claims, wherein said top no-drip rib (44, 54) has a truncated edge (45; 55).

7. Combination of a preform according to any of the preceding claims, and a closure cap, wherein said spout (20) has at least one continuously extending peripheral protrusion which is adapted to engage with an internal engagement means of the closure cap (10; 70, 70'; 90, 90'; 110).

8. Preform according to one of the preceding claims 1 to 6, wherein the inner surface profile of the neck (3) is convex.

9. Preform according to claims 1 to 6 or 8, wherein the gradient of the inner surface profile increases stepwise from the pouring edge (23) towards the bottom (4) of the preform.

10. Preform according to claims 1 to 6 or 8, wherein the gradient of the inner surface profile increases continuously from the pouring edge (23) towards the bottom (4) of the preform.

11. Preform according to one of claims 9 or 10, wherein said top no-drip rib (24) forms a continuation of the curve of said inner surface profile.

12. Combination of a preform and a closure cap according to claim 7 and one of claims 8 to 1 dependent on claim 7, wherein said pouring spout (20), for closing said pouring opening, is provided with at least one rib (21; ...) adapted to sealingly engage said internal engagement means (17) provided on the inner part of the skirt portion of said closure cap (10;... 110).

13. Combination of a preform and a closure cap according to the preceding claim, wherein a further rib is provided to sealingly engage a security ring (14; 74; 114) extending from said skirt portion of said closure cap (10; ... 110).

14. Preform according to one of the preceding claims 1 to 6 or 8 to 11, wherein the bottom zone (4) has a substantially conical profile.

15. Preform according to the preceding claim, wherein the bottom profile (4) and the apex angle thereof are such that nesting of preforms when they are stacked is avoided.

16. Preform according to one of the preceding claims 1 to 6 or 8 to 11, 14 or 15, wherein said preform is made from PET.

17. Preform according to one of the preceding claims 1 to 6 or 8 to 11 or 14 to 16, wherein the preform is injection moulded.

18. Method subjecting an injection moulded preform in accordance with any one of claims 1 to 6, 8 to 11 or 14 to 16 to a blow moulding process to form a container.

19. Method according to claim 18, wherein the blow moulding process maintains the spout configuration of the preform.

20. Combination of a preform and a closure cap according to one of the claims 7 to 17, wherein the abovementioned closure cap (10, 70, 110) is provided with a security ring (14, 74, 114).

21. Combination of a preform and a closure cap according to claim 20, wherein the closure cap (10, 70, 110) is hingedly connected (117) to the abovementioned security ring (14, 74, 114), which is permanently fixed around the neck (3) of the preform, in such a way that the closure cap can be flapped open and shut on the pouring spout, thereby allowing the closure cap to remain permanently on the pouring spout either in open position (C), closed position (A) or intermediate position (B).

22. Combination of a preform and a closure cap according to one of the claims 20 or 21, wherein said externally extending annular projection (24, ..., 64) is adjacent to the edge of the pouring opening (5) and the abovementioned closure cap (10) is provided with an encircling rib (11) which interacts with said projection (24, ..., 64).

23. Combination of a preform and a closure cap according to one of the claims 20 to 22, wherein there is provided a pull tab (12) with a security strip (78, 118) which are arranged peripherally on the side of the closure cap (10), for opening the secured container by tearing said strip (78, 118) of the ring (14), said tab (12) and strip (78, 118) being formed as a single piece with the closure cap (10), and securing ring (14, 74, 114)

24. Combination of a preform and a closure cap according to one of the claims 20 to 23, wherein a seat (22) is provided opposite the free edge (15) of the closure cap (10), which seat acts as a stop for the closure cap.

25. Combination of a preform and a closure cap according to one of the claims 20 to 24, wherein said preform has a universal neck (3) which is adapted for various types of closure caps including so-called monocaps (70', 90') and/or two component caps (70; 90).

26. Combination of a container obtained from a preform (2) according to one of the claims 1 to 17, resp. 20 to 25, and a closure cap according to one of the claims 7 to 13, resp. 20 to 25, wherein the security ring (14, 114) extends to a certain height of the further recess (28', 128'), in such a way that in the vertical position of the container a cup (99) is formed by said further recess (28', 128'), in which cup (99) any running droplets of the liquid in the container can be collected, thus preventing soiling of the walls of the container.

## Patentansprüche

1. Vorformling, der dazu eingerichtet ist, dem Blasformen zu einem Behälter unterzogen zu werden, wobei der genannte Vorformling einen Boden (4) aufweist, eine rohrförmige Wand (1) sich vom genannte Boden (4) länglich nach oben erstreckt, der teil der Wand (1), der dem Boden (4)gegenüberliegt, eine Ausgußschnauze (20) miet einem profilierten Hals (3) bildet, der eine Ausgußöffnung umgibt, die genannte Ausgußschnauze (20) in die genannte rohrförmige Wand (1) integriert ist, die genannte Schnauze (20) eine rotationssymmetrische Ausbildung aufweist, der Hals (3) miet einem sich nach außen erstreckenden, ringförmigen Vorsprung (24; 34; 44; 64; 84) versehen ist, der eine erste Ausguß- Tropfenfänger-Rippe an der genannten Öffnung bildet, die genannte Rippe eine sich nach unten erstreckende Ausgussfläche aufweist, die sich von den genannten Wand (1) nach außen erstreckt, das Außenprofil des Halses (3) mit mindestens zwei weiteren, ringförmigen Vorsprünge (21, 22, 41) versehen ist, der mindestens eine zweite Tropfenfänger-Rippe bildet, und die genannte erste Ausguß-Tropfenfänger-Rippe und die eine der weiteren Tropfenfäger-Rippe (21, 22; 41) zwischeneinander eine ringförmige Aussparung (28; 128) umgrenzen, und worin mindestens eine weitere ringförmige Aussparung (28', 128'...) durch genannte weitere ringförmige Aussparungen (21, 22; 41) begrenzt ist.

2. Vorformling nach Anspruch 1, worin sich die genannte obere Rippe (24;...) und jede zweite Trofenfänger-Rippe in Bezug auf die genannte Wand konvex erstreckt.

3. Vorformling nach einem der Ansprüche 1 oder 2, worin die genannte obere Rippe (24) von zwei im wesentlichen geraden Flächen (26, 27) begrenzt ist, die zueinander einen Winkel (α) bilden, wobei die Unterseite einer (27) dieser eine Grenzfläche (27) für die genannte Aussparung (28) bildet, die sich im wesentlichen senkrecht zur Längsachse (ℓ) des Vorformlings erstreckt.

4. Vorformling nach dem vorangehenden Anspruch, worin der genannte Winkel (α) zwischen 30° und 80° und bevorzugt zwischen 46° und 65° liegt.

5. Vorformling nach einem der Ansprüche 1 oder 2, worin die genannte obere Tropfenfänger-Rippe (54; 64; 84) von mindestens einer gekrümmten Oberfläche (46; 56;...) begrenzt ist.

6. Vorformling nach einem der vorangehenden Ansprüche, worin die genannte obere Tropfenkänger-Rippe (44, 54) eine abgestumpfte Kante (45; 55) aufweist.

7. Kombination eines Vorformling nach irgendeinem der vorangehenden Ansprüche und eines Verschlüßdeckels, worin die genannte Schnauze (20) mindestens eine sich durchgehend erstreckende Umfangsausladung aufweist, die dazu eingerichtet ist, mit dem inneren Eingriffsmitteln des Verschlussdeckels (10; 70, 70'; 90, 90'; 110) in Eingriff zu treten.

8. Vorformling nach einen der vorangehenden Ansprüche 1 bis 6, worin das Innenoberflächenprofil des Halses (3) konvex ist.

9. Vorformling nach den Ansprüchen 1 bis 6 oder 8, worin der Gradient des Innenoberflächenprofils schrittweise von der Ausgusskante (23) zum Boden (4) des Vorformlings zunimmt.

10. Vorformling nach den Ansprüchen 1 bis 6 oder 8, worin der Gradient des Innenoberflächenprofils kontinuierlich von der Ausgusskante (23) zum Boden (4) des Vorformlings zunimmt.

11. Vorformling nach einem der Ansprüche 9 oder 10, worin die obere Tropfenfänger-Rippe (24) eine Fortsetzung der Krümmung des genannten Innenoberflächenprofils bildet.

12. Kombination eines Vorformling und eines Verschlüßdeckels nach Anspruch 7 und einem der Ansprüche 8 bis 11, worin die genannte Ausgußschnauze (20) zum Verschließen der genannten Ausgußöffnung mit mindestens einer Rippe (21; ...) versehen ist, die dazu eingerichtet ist, dichtend mit den genannten inneren Eingriffsmitteln (17) in Eingriff zu treten, die auf dem inneren Teil des Schürzenabschnitts des genannten Verschlussdeckels (10; ...; 110) vorgesehen sind.

13. Kombination eines Vorformling und eines Verschlüßdeckels nach dem vorangehenden Anspruch, worin eine weitere Rippe vorgesehen ist, um mit einem Sicherungsring (14; 74; 114) in dichtenden Eingriff zu treten, der sich vom genannten Schürzenabschnitt des genannten Verschlussdeckels (10; ...; 110) aus erstreckt.

14. Vorformling nach einem der vorangehenden Ansprüche 1 bis 6 oder 8 bis 11, worin der Bodenbereich (4) ein im wesentlichen konisches Profil aufweist.

15. Vorformling nach dem vorangehenden Anspruch, worin das Bodenprofil (4) und sein Scheitelwinkel derart sind, daß das Ineinandersitzen von Vorformlingen, wenn sie gestapelt sind, vermieden ist.

16. Vorformling nach einem der vorangehenden Ansprüche 1 bis 6 oder 8 bis 11, 14 oder 15, worin der genannte Vorformling aus Polyethylen (PET) hergestellt ist.

17. Vorformling nach einem der vorangehenden Ansprüche 1 bis 6 oder 8 bis 11 oder 14 bis 16, worin der Vorformling spritzgegossen ist.

18. Verfahren, bei dem ein spritzgegossener Vorformling in Übereinstimmung mit irgendeinem der Ansprüche 1 bis 6, 8 bis 11, oder 14 bis 16 einem Blasformvorgang unterzogen wind, um einen Behälter zu formen.

19. Verfahren nach Anspruch 18, worin der Blasformvorgang die Schnauzenausbildung des Vorformlings beibehält.

20. Kombination eines Vorformling und eines Verschlüßdeckels nach einem der vorangehenden Ansprüche 7 bis 17, worin das genannte Verschlüßdeckel (10, 70, 110) mit einem Sicherungsring (14, 74; 114) vorgesehen ist.

21. Kombination eines Vorformling und eines Verschlüßdeckels nach dem Anspruch 20, worin das Verschlüßdeckel (10, 70, 110) mit genannte um den Hals (3) des Vorformling dauerhaft verbunden Sicherungsring (14, 74, 114) gelenkt (117) derart verbunden ist, daß das Verschlüssdeckel auf die Ausgußschnauze geflattert geöffnet und geschloßen sein kann, damit das Verschlüßdeckel auf die Ausgußschnauze entweder in geöffneter Position (C), in geschlossener Position (A) oder in Zwischenposition (B) dauerhaft bleiben kann.

22. Kombination eines Vorformling und eines Verschlüßdeckels nach einem der Ansprüche 20 oder 21, worin genannte nach außen erstreckenden ringförmigen Vorsprung (24,..., 64) neben dem Rand der Ausgußöffnung (5) ist und das oben erwähnten Verschlüßdeckel (10) mit einer umkreisenden auf besagte Vorsprung (24,..., 64) einwirkende Rippe (11) versehen wird.

23. Kombination eines Vorformling und eines Verschlüßdeckels nach einem den Ansprüche 20 bis 22, worin einem peripher auf der Seite des Verschlüßdeckels (10) angeordnete Zugvorsprung (12) mit einem Sicherheitsstreifen (78, 118) für das Öffnen des gesicherten Behälters durch zerreißen des besagtes Streifens (78, 118) des Ringes (14) versehen wird, wobei besagte Vorsprung (12) und der Streifen (78, 118) als Einzelstück mit dem Verschlüßdeckel (10) und Sicherungsring (14, 74, 114) gebildet wird.

24. Kombination eines Vorformling und eines Verschlüßdeckels entsprechend einem der Ansprüche 20 bis 23, worin ein Sitz (22) gegenüber dem freien Rand (15) des Verschlüßdeckels (10) versehen wird, wobei dieser Sitz als ein Anschlag für die Verschlüßdeckel dient.

25. Kombination eines Vorformling und eines Verschlüßdeckels entsprechend einem der Ansprüche 20 bis 24, worin besagter Vorformling einen Universalhals (3) hat, der für verschiedene Arten Verschlüßdeckels einschließlich sogenannte Monocaps (70 ', 90') und/oder zwei Teilkappen angepaßt wird (70; 90).

26. Kombination eines Behälters erhalten von einem Vorformling (2) entsprechend einem der Ansprüche 1 bis 17, resp. 20 bis 25 und eines Verschlüßdeckels entsprechend einem der Ansprüche 7 bis 13, resp. 20 bis 25, worin der Sicherungsring (14, 114) sich bis auf eine bestimmte Höhe der weiteren Aussparung (28 ', 128') derart erstreckt, daß in der vertikalen Position des Behälters ein Schale (99) durch besagter weiterer Aussparung (28', 128') gebildet wird, in deren Schale (99) irgendwie laufende Tröpfchen der Flüssigkeit im Behälter gesammelt werden können, dabei das Beschmutzen der Wände des Behälters verhindern wird.

## Revendications

1. Préforme agencée pour être soumise à être moulée par soufflage en un récipient, la préforme précitée présentant un fond (4), une paroi tubulaire (1) s'étendant vers le haut à partir dudit fond (4) de façon allongée, dans laquelle la partie de la paroi (1) qui est opposée audit fond (4) forme un bec verseur (20) présentant un col profilé (3) enveloppant une ouverture verseuse, dans laquelle ledit bec verseur (20) est d'une pièce avec ladite paroi tubulaire (1), ledit bec (20) présentant une configuration en rotation symétrique, dans laquelle le col (3) est pourvu d'une saillie annulaire s'étendant vers l'extérieur (24 ; 44 ; 64 ; 84) formant un premier rebord verseur anti-goutte à hauteur de ladite ouverture, ledit rebord comprenant une surface verseuse s'étendant vers le bas, laquelle s'étend vers l'extérieur depuis ladite paroi (1), le profil extérieur du col (3) étant pourvu d'au moins deux autres saillies annulaires (21, 22 ; 41) formant au moins un deuxième rebord anti-goutte, dans laquelle ledit premier rebord anti-goutte et l'une des autres saillies annulaires (21, 22 ; 41) délimitent un évidement annulaire (28, 38 ; ...) entre ceux-ci, et dans laquelle au moins un autre évidement annulaire (28', 128' ...) est délimité entre lesdites autres saillies annulaires (21, 22 ; 41).

2. Préforme selon la revendication 1, dans laquelle ledit rebord supérieur (24 ;...) et chaque deuxième rebord anti-goutte s'étendent de façon convexe par rapport à ladite paroi.

3. Préforme selon l'une des revendications 1 ou 2, dans laquelle ledit rebord supérieur (24) est délimité par deux surfaces sensiblement droites (26, 27) formant un angle (α) entre elles, la surface inférieure (27) formant une surface limite (27) pour ledit évidement (28) s'étendant sensiblement perpendiculairement à l'axe longitudinal (ℓ) de la préforme.

4. Préforme suivant la revendication précédente, dans laquelle l'angle précité (α) est compris antre 30° et 80°, de préférence entre 45° et 65°.

5. Préforme suivant l'une des revendications 1 ou 2, dans laquelle ledit rebord supérieur anti-goutte (54 ; 64 ; 84) est délimité par au moins une surface courbe (46 ; 56 ;...)

6. Préforme suivant l'une quelconque des revendications précédentes, dans laquelle ledit rebord supérieur anti-goutte (44, 54) présente un bord tronqué (45 ; 55).

7. Combinaison d'une préforme suivant l'une quelconque des revendications précédentes et d'une capsule, dans laquelle ledit bec (20) présente au moins une saillie périphérique s'étendant de façon continue, laquelle est agencée pour s'engager avec un moyen d'engagement intérieur de la capsule de fermeture (10 ; 70, 70' ; 90, 90' ; 110).

8. Préforme suivant l'une des revendications précédentes 1 à 6, dans laquelle ledit profil de surface intérieur du col (3) est convexe.

9. Préforme suivant l'une des revendications 1 à 6 ou 8, dans laquelle le gradient du profil de surface intérieur s'accroît par palier à partir du bord verseur (23) vers le fond (4) de la préforme.

10. Préforme suivant l'une des revendications 1 à 6 ou 8, dans laquelle le gradient du profil de surface intérieure s'accroît de façon continue à partir du bord verseur (23) vers le fond (4) de la préforme.

11. Préforme suivant l'une des revendications 9 ou 10, dans laquelle ledit rebord anti-goutte supérieur (24) forme un prolongement de la courbe dudit profil de surface intérieur.

12. Combinaison d'une préforme et d'une capsule de fermeture suivant la revendication 7 et l'une des revendications 8 à 11, dépendant de la revendication 7, dans laquelle le bec verseur précité (20) est pourvu, pour fermer ladite ouverture verseuse, d'au moins un rebord (21 ;...) agencé pour s'engager de façon étanche dans lesdits moyens d'engagement intérieurs (17) prévus sur la partie intérieure de la partie de la jupe de ladite capsule de fermeture (10 ; ... ; 110).

13. Combinaison d'une préforme et d'une capsule de fermeture suivant la revendication précédente, dans laquelle un autre rebord est prévu pour engager de façon étanche un anneau de sécurité (14 ; 74 ; 114) s'étendant à partir de la partie de jupe précitée de la capsule de fermeture précitée (10 ; ... ; 110).

14. Préforme suivant l'une des revendications précédentes 1 à 6 ou 8 à 11, dans laquelle la zone de fond (4) présente un profil sensiblement conique.

15. Préforme suivant la revendication précédente, dans laquelle le profil de fond (4) et l'angle de sommet de celle-ci sont tels que l'emboîtement de préformes en cas d'empilement de celles-ci est évité.

16. Préforme suivant l'une des revendications précédentes 1 à 6 ou 8 à 11, 14 ou 15, dans laquelle ladite préforme est constituée de PET.

17. Préforme suivant l'une des revendications précédentes 1 à 6 ou 8 à 11 ou 14 à 16, dans laquelle la préforme est moulée par injection.

18. Procédé pour soumettre une préforme moulée par injection selon l'une quelconque des revendications 1 à 6, 8 à 11 ou 14 à 16, à un procédé de soufflage de façon à former un récipient.

19. Procédé selon la revendication 18, dans lequel le procédé de soufflage conserve la configuration de bec de la préforme.

20. Combinaison d'une préforme et d'une capsule de fermeture suivant l'une des revendications 7 à 17, dans laquelle la capsule de fermeture précitée (10, 70, 110) est pourvue d'un anneau de sécurité (14, 74, 114).

21. Combinaison d'une préforme et d'une capsule de fermeture suivant la revendication 20, dans laquelle la capsule de fermeture (10, 70, 110) est articulée (117) à l'anneau de sécurité précité (14, 74, 114), qui est fixé de façon permanente autour du col (3) de la préforme, de façon telle que la capsule de fermeture puisse être relevée et rabattue sur le bec verseur, permettant ainsi à la capsule de fermeture de rester en permanence sur le bec verseur soit en position ouverte (C), soit en position fermée (A) ou en position intermédiaire (B).

22. Combinaison d'une préforme et d'une capsule de fermeture suivant l'une des revendications 20 ou 21, dans laquelle ladite saillie annulaire s'étendant extérieurement (24,..., 64) est adjacente au bord de l'orifice verseur (5) et la capsule de fermeture précitée (10) est pourvue d'une arête de cerclage (11) qui interagit avec ladite saillie (24, ..., 64).

23. Combinaison d'une préforme et d'une capsule de fermeture suivant l'une des revendications 20 à 22, dans laquelle il est prévu une languette à tirer (12) avec une bande de sécurité (78, 118) qui sont agencées de façon périphérique sur le côté de la capsule de fermeture (10) pour ouvrir le récipient scellé par le déchirement de ladite bande (78, 118) de l'anneau (14), la languette (12) et la bande (78, 118) précitées étant formées d'une pièce avec la capsule de fermeture (10) et l'anneau de sécurité (14, 74, 114).

24. Combinaison d'une préforme et d'une capsule de fermeture suivant l'une des revendications 20 à 23, dans laquelle un siège (22) est prévu à l'opposé du bord libre (15) de la capsule de fermeture (10), lequel siège agit comme une butée pour la capsule de fermeture.

25. Combinaison d'une préforme et d'une capsule de fermeture suivant l'une des revendications 20 à 24, dans laquelle ladite préforme possède un col standard (3) qui est adapté pour différents types de capsules de fermetures en ce compris les dénommées monocapsules (70', 90') et/ou les capsules à deux composantes (70; 90).

26. Combinaison d'un récipient obtenue à partir d'une préforme (2) suivant l'une des revendications 1 à 17, et respectivement 20 à 25, et d'une capsule de fermeture suivant l'une des revendications 7 à 13, et respectivement 20 à 25, dans laquelle l'anneau de sécurité (14, 114) s'étend jusqu'à une certaine hauteur de l'autre évidement (28', 128'), de façon telle qu'une cuvette (99) soit formée par l'autre évidement précité (28', 128') lorsque le récipient est en position verticale, dans laquelle cuvette (99) toute gouttelette du liquide coulant dans le récipient peut être collectée empêchant ainsi l'encrassement des parois du récipient.
